# EUROPÄISCHE PATENTSCHRIFT

(11) **EP 4 302 059 B1**
(45) Veröffentlichungstag und Bekanntmachung des Hinweises auf die Patenterteilung: **10.12.2025**
(21) Anmeldenummer: 22708558.6
(22) Anmeldetag: 01.03.2022
(51) Int. Cl.: G01L 1/04, G01L 1/18, G01L 1/22, G01L 5/162, G01L 5/22

(54) **VORRICHTUNG ZUR MESSUNG VON VERFORMUNGEN, SPANNUNGEN, KRÄFTEN UND/ODER DREHMOMENTEN IN MEHREREN ACHSEN**
DEVICE FOR MEASURING DEFORMATIONS, STRESSES, FORCES AND/OR TORQUES IN A PLURALITY OF AXES
DISPOSITIF DE MESURE DE DÉFORMATIONS, DE CONTRAINTES, DE FORCES ET/OU DE COUPLES DANS UNE PLURALITÉ D'AXES

(30) Priorität: 01.03.2021 EP 21159920
(43) Veröffentlichungstag der Anmeldung: 10.01.2024
(73) Patentinhaber: Hahn-Schickard-Gesellschaft für angewandte Forschung e. V., 70569 Stuttgart (DE)
(72) Erfinder: FOLKMER, Bernd, 78462 Konstanz (DE); HEHN, Thorsten, 79276 Reute (DE); KOEHLER, Manuel, 79256 Buchenbach (DE)
(74) Vertreter: Hertin und Partner Rechts- und Patentanwälte PartG mbB
(86) Internationale Anmeldenummer: PCT/EP2022/055098
(87) Internationale Veröffentlichungsnummer: WO 2022/184690

(56) Entgegenhaltungen:
- EP-A1- 3 722 765
- WO-A1-03/087750
- US-A- 5 867 808

## Beschreibung

Die Erfindung betrifft bevorzugt eine Vorrichtung zur Messung von mehrachsigen Beanspruchungen eines Objektes umfassend einen Federkörper und einen Sensorchip, welcher ein oder mehrere Sensorelemente zur Messung einer Verformung, Spannung, Kraft und/oder eines Drehmomentes sowie eine elektronische Schaltung auf einem Substrat aufweist. Der Federkörper umfasst eine Grundplatte auf deren Vorderseite ein Krafteinleiter, vorzugsweise in Form eines Stiftes, installiert vorliegt, wobei der Sensorchip auf der Rückseite der Grundplatte unterhalb des Krafteinleiters positioniert ist. Die Erfindung betrifft weiterhin ein System umfassend eine derartige Vorrichtung sowie eine Datenverarbeitungseinheit, wobei die Datenverarbeitungseinheit für ein Auslesen der vom Sensorchip ermittelten Messdaten konfiguriert ist und vorzugsweise auf deren Basis die auf den Krafteinleiter wirkenden Kräfte und/oder Drehmomente ermittelt.

### Hintergrund und Stand der Technik

Die Erfindung betrifft das Gebiet von Sensoren zur Messung von Verformungen, Spannungen, Kräfte und/oder Drehmomenten.

Kraftmessungen an Objekten werden z. B. vorgenommen zur Dimensionierung und Überprüfung von mechanisch beanspruchten Bauteilen. Bei einer funktionsgerechten Dimensionierung von mechanisch beanspruchten Bauteilen ist es erforderlich, Kenntnis über die Art der Beanspruchungen zu haben. Die entscheidenden Größen für die Konstruktion sind die maximal auftretenden Spannungen, die letztendlich die Abmessungen festlegen. Diese Spannungen gilt es im Vorwege zu bestimmen und anschließend experimentell im Versuch nachzuprüfen. Eine experimentelle Spannungsanalyse kann somit als Bindeglied zwischen den theoretischen Berechnungen und den Nachweisen im Versuch betrachtet werden.

Ebenfalls ist es für die Überwachung der Zustände von Maschinen erforderlich Kräfte und/oder Verformungen zu messen, um veränderlichen Beanspruchungen zu erfassen und zu dokumentieren. Diese können bspw. aufgrund von zeitlichen Änderungen der Rand- und Betriebsbedingungen sowie der Werkstoffeigenschaften auftreten.

Wünschenswert ist hierfür eine besondere kompakte Dimensionierung der Kraftsensoren, um Einflüsse auf die zu überwachenden Maschinen oder Bauteile auszuschließen. Weiterhin ist eine kompakte Dimensionierung der Kraftsensoren erstrebenswert, um lokale (ggf. mehrachsige) Verformungs- bzw. Spannungs-/Dehnungszustände aufzulösen. In Abhängigkeit von der lokalen Verteilung der Verformungs- bzw. Spannungsgradienten kann ein großflächiger, nicht kompakter Messwandler lokale Zustände nachteilig nur grob mitteln.

Die Größe von bekannten Kraftsensoren werden in der Regel durch die Dimensionierung von Federnkörpern bzw. Wägezellen, sowie den minimalen Abmaßen der Messwandler bestimmt.

Die Federkörper oder die Wägezelle sind hierbei zumeist eine geeignet geformtes Stück Metall, dass zur Krafteinleitung dient und dessen Geometrie sich unter Einwirkung der Kräfte oder Drehmomente geringfügig verändert. Die entstehende Verformung wird durch einen Messwandler, beispielsweise von einem Dehnungsmessstreifen oder auch einer anderen resistiven oder kapazitiven Messeinheit bestimmt.

Die Gesamtausdehnung der Vorrichtung wird insbesondere durch die minimale Abmessung der Messwandler bestimmt. Bei der Bestimmung mehrachsiger Beanspruchungen sind zumeist mehrere Messwandler - zu jeder Achse mindestens ein Messwandler - erforderlich, welche an entsprechenden Positionen räumlich separat angeordnet werden.

Durch die Platzierung mehrere Messwandler, beispielsweise in Form von Dehnmessstreifen, ist ein erhöhter Platz erforderlich.

Bedingt durch die Bauteilgeometrie und dem Lastangriff ist der Beanspruchungszustand eine Funktion des Ortes. Über die Oberfläche variieren die Beträge der Hauptspannungen ebenso wie deren Hauptrichtungen. Sofern keine zusätzliche normale Last (z.B. Druck) anliegt, herrscht bei mehrachsigen Beanspruchungen an Oberflächen von zu vermessenen Objekten üblicherweise ein zweiachsiger Spannungszustand vor. In der Regel sind dessen Hauptrichtungen aber unbekannt.

DMS-Rosetten, welche mehrere DMS in verschiedene Richtungen aufweisen, erfüllen innerhalb der experimentellen Spannungsanalyse die wichtige Aufgabe, einen 2-achsigen Spannungs-/ Dehnungszustand vollständig zu bestimmen, da nachgewiesen wurde, dass mit drei voneinander unabhängigen Dehnungsmessungen in verschiedenen Richtungen die Hauptdehnungen bestimmbar sind. Selbst wenn die Hauptrichtungen bekannt sind, werden immer noch zwei voneinander unabhängige Dehnungsmessungen zu deren Bestimmung benötigt. Bekannte Anordnungen aus dem Stand der Technik sind dabei die 45°-Rechtwinkel-Rosette und die 60°-Delta-Rosette.

Übliche Federkörper weisen konstruktiv eigens mehrere Zonen für jeweilige einachsigen Beanspruchungen auf, welche gezielt mittels mehrerer Messwandler ausgemessen werden können.

Typische Federkörperformen für Wägezellen umfassen beispielsweise Doppelbiegebalken für kleine Lasten, Scherstäbe für größere Lasten, säulenförmige Federkörper (Druckstab oder Hohlzylinder, Ringtorsionsfederkörper für hohe Lasten, Multibiegebalken-Federkörper für hochwertige Waagen oder Membran-Federkörper, welche kleine Baugröße bei hohen Steifigkeiten aufweisen.

Der Spannungszustand wird über eine Verformungs- oder Dehnungsmessung durchgeführt. Selbst bei hohen Bauteilbeanspruchungen (Stress kurz vor Bruchgrenze) liegen bei üblichen, meist metallischen Werkstoffen nur sehr kleine Verformungen bzw. Dehnungen vor (ca. 1-2°/oo).

Bei besonderes steifen Systemen, wie Werkzeugmaschinen oder linearen Messgeräten, ist die nutzbare Dehnung deutlich kleiner. Halbleiter DMS die hierfür eingesetzt werden können sind meist nur mit Aufwand applizierbar.

Dehnungsmessstreifen basieren grundsätzlich auf der Änderung des elektrischen Widerstands durch Längen- und Querschnittsänderung. Wird ein DMS gedehnt, so nimmt sein Widerstand zu. Wird er gestaucht (negative Dehnung), so nimmt sein Widerstand R ab. Dabei gilt *DR*/*R* = *k*·*ε*, wobei *ε* der relativen Längenänderung entspricht.

Problemfelder metallischer DMS sind geringe k-Faktoren und resultierende geringe Empfindlichkeiten sowie große DMS und daher schlechte Ortsauflösung, insbesondere bei Rosetten, bei denen bedingt durch die Größe der DMS an die verschiedenen Achsen an verschiedenen Orten gemessen wird, kann sowohl eine schlechte Ortsauflösung, als auch ein fehlerbehaftetes Ergebnis resultieren.

Wesentlich empfindlichere Messungen erlauben dahingegen Halbleiter-DMS. Jedoch ist ebenso die mechanische Empfindlichkeit dieser DMS sehr hoch, die Montage ist daher aufwendig und es kommt nichtsdestotrotz oft zu einem Bruch des DMS. Außerdem werden diese Halbleiter DMS oft ganzflächig und steif an das zu vermessene Objekt angeklebt, nicht selten auch um die Stabilität des DMS zu erhöhen. Dabei beeinflussen und verfälschen die mechanischen Eigenschaften des Klebers oftmals die Dehnungsmessung.

Auch generell ergeben sich bei den bekannten DMS Messmethoden häufig Probleme, insbesondere bei den üblicherweise verwendeten Brückenschaltungen mit nur 1 oder 2 aktiven, relativ großen DMS an unterschiedlichen Orten auf dem Bauteil und Ergänzung der Brückenschaltung durch passive Widerstände, nämlich insbesondere eine schlechte Temperaturkompensation und geringe Empfindlichkeiten.

Im Stand der Technik sind auch Siliziumchip basierte Sensoren bekannte, welche mehrere Sensorelemente aufweisen, um Spannungsverteilungen zu messen.

In Jaeger et al. 2000 werden Spannungsmessungen offenbart, welche auf dem piezoresistiven Verhalten CMOS-integrierter Feldeffektsensoren basieren. Die Schaltungen liefern temperaturkompensierte Messergebenisse, welche proportional zur Normalspannungsdifferenz (σₓₓ - σ_{yy}) und der Scherspannung (σ_{xy}) in einer Ebene sind. Die Verwendung der Silizium-Feldeffekttransistoren als Spannungssensoren bietet gegenüber konventionellen Widerstandselementen aufgrund ihrer geringen Größe, hohen Empfindlichkeit und einer Integrierbarkeit in aktive Schaltungen eine Reihe von Vorteilen und erlaubt gut lokalisierte Spannungszustandsmessungen.

Gieschke et al. 2009 schlagen CMOS-integrierten Sensoren vor, wobei piezoresistive Sensorbrücken mit analoger und digitaler Schaltungstechnik zum Einsatz kommen. Auf einem Sensorchip sind 32 piezoresistive Sensorbrücken als Sensorelemente verteilt und erlauben die Messung der Scherspannung (σ_{xy}) oder der Normalspannungsdifferenz (σₓₓ - σ_{yy}) in einer Ebene. Die Sensorelemente können als vier Transistoren beschrieben werden, welche im Quadrat als Wheatstone'sche Brücken angeordnet sind. Die Scherspannung wird von n-Kanal-basierten Transistoren bestimmt, wobei die Sensorbrücke um 45° zu einem (x,y)-Koordinatensystem gedreht vorliegt, während p-Kanal-basierten Transistoren als Sensorbrücke parallel zum Koordinatensystem angeordnet vorliegen und die Normalspannungsdifferenz messen.

Kuhl et al. 2013 beschreiben Sensorchips, welche auf der Technologie von Gieschke et al. 2009 aufbauen. Die piezoresistiven Sensorbrücken liegen als quadratische Feldeffekttransistoren (FET, bevorzugt MOSFET) mit vier Source/Drain-Kontakten (Piezo-FETs) ausgestaltet vor, die den piezoresistiven Schereffekt in n-Typ (NMOS) oder p-Typ (PMOS) Inversionsschichten ausnutzen. Zur Messung der Scherspannung σ_{xy} werden bevorzugt NMOS-Sensorelemente und zur Messung der Normalspannungsdifferenz (σₓₓ - σ_{yy}) PMOS-Sensorelemente verwandt. Auf einem Sensorchip sind 24 solcher piezoresistiven Sensorbrücken als Sensorelemente verteilt. Zehn NMOS-Typ Sensorelemente messen die Scherspannung und vierzehn PMOS-Typ Sensorelemente die Normalspannungsdifferenz.

In Bezug auf deren Einsatz zur Messung und/oder Überwachung mehrachsiger Beanspruchungen von Bauteilen oder Objekten besteht jedoch ein Verbesserungsbedarf. Die WO 03/087750 A1 offenbart einen Stresssensor mit einem Substrat, einem Krafteinleitpin und Dehnungsmessstreifen.

### Aufgabe der Erfindung

Aufgabe der Erfindung ist es eine Vorrichtung, ohne die Nachteile des Standes der Technik bereitzustellen. Insbesondere war es eine Aufgabe der Erfindung, eine Vorrichtung zur Verfügung zu stellen, welche mit hoher Präzision mehrachsige Beanspruchungen von Objekten ermitteln kann und sich dabei zudem durch einen kompakten, robusten Aufbau mit geringer Fehleranfälligkeit auszeichnet.

Gelöst wird die Aufgabe durch die Merkmale des unabhängigen Anspruchs 1. Vorteilhafte Ausgestaltungen der Erfindung sind in den abhängigen Ansprüchen beschrieben.

Der Federkörper erlaubt hierbei vorteilhaft Spannungen, Kräfte oder Stress auch aus mehrachsigen Beanspruchungen bzw. äußeren Lasten in nur eine kleine örtliche Zone in der Grundplatte zu konzentrieren. Beispielsweise kann es sich bei dem Krafteinleiter um einen länglichen Kraftzeiger bzw. Stift handeln, welcher an eine Einspannstelle lokal mit der Grundplatte verbunden vorliegt.

Eine Beanspruchung des Krafteinleiter an dem von der Grundplatte abgewandten Ende führt zu einer lokalisierten Stressverteilung an der Einspannstelle sowie durch geeignete Gestaltung des Federkörpers auch an der Rückseite der Grundplatte, welche vorteilhaft in Bezug auf den Betrag (Höhe) und Richtung eindeutig mit der Beanspruchung des Krafteinleiters korreliert.

Vorzugsweise liegen die maximalen Beanspruchung an der Messstelle in der gleichen Größenordnung wie an der vorderseitigen Einspannstelle des Krafteinleiters bzw. Stiftes, wobei ungewünscht hohe Kerbspannungen an der Einspannstelle des Stiftes reduziert sind. Die Spannungsverteilung an der Rückseite ist vorzugsweise flächenmäßig an den Sensorchip angepasst und erhöht. Vorteilhaft ist es damit möglich äußere Lasten bzw. zu messenden Kräfte sehr empfindlich zu messen, wobei es zu keiner Beschränkung durch ein Festigkeitsproblem an der Einspannstelle kommt.

Vorteilhaft erlaubt der auf Rückseite der Grundplatte befestigte Sensorchip eine präzise, am Ort des Chips ortsaufgelöste, Messung der Verformungen, Spannungen, Kräfte und/oder Drehmomente in dem betreffenden Bereich der Grundplatte. Hierbei werden bevorzugt Verformungen, Spannungen oder auf die Grundplatte wirkende Kräfte und Drehmomente auf das Substrat des Sensorchips übertragen, wobei die einen oder mehreren Sensorelemente Verformungen oder Spannungen des Substrates ermitteln. Bei entsprechender Kalibrierung

### Zusammenfassung der Erfindung

Gelöst wird die Aufgabe durch die Merkmale des unabhängigen Anspruches 1. Vorteilhafte Ausgestaltungen der Erfindung sind in den abhängigen Ansprüchen beschrieben.

In einem Aspekt betrifft die Erfindung eine Vorrichtung zur Messung mehrachsiger Beanspruchungen eines Objektes umfassend
- einen Federkörper und
- einen Sensorchip, umfassend ein oder mehrere Sensorelemente zur Messung von Verformungen, Spannungen, Kräfte und/oder Drehmomente sowie eine elektronische Schaltung auf einem Substrat, wobei das Substrat des Sensorchips ein Halbleitermaterial umfasst,
wobei der Federkörper eine Grundplatte umfasst, auf deren Vorderseite ein Krafteinleiter installiert vorliegt, wobei der Sensorchip auf der Rückseite der Grundplatte unterhalb des Krafteinleiters positioniert ist.

Der Federkörper erlaubt hierbei vorteilhaft Spannungen, Kräfte oder Stress auch aus mehrachsigen Beanspruchungen bzw. äußeren Lasten in nur eine kleine örtliche Zone in der Grundplatte zu konzentrieren. Beispielsweise kann es sich bei dem Krafteinleiter um einen länglichen Kraftzeiger bzw. Stift handeln, welcher an eine Einspannstelle lokal mit der Grundplatte verbunden vorliegt.

Eine Beanspruchung des Krafteinleiter an dem von der Grundplatte abgewandten Ende führt zu einer lokalisierten Stressverteilung an der Einspannstelle sowie durch geeignete Gestaltung des Federkörpers auch an der Rückseite der Grundplatte, welche vorteilhaft in Bezug auf den Betrag (Höhe) und Richtung eindeutig mit der Beanspruchung des Krafteinleiters korreliert.

Vorzugsweise liegen die maximalen Beanspruchung an der Messstelle in der gleichen Größenordnung wie an der vorderseitigen Einspannstelle des Krafteinleiters bzw. Stiftes, wobei ungewünscht hohe Kerbspannungen an der Einspannstelle des Stiftes reduziert sind. Die Spannungsverteilung an der Rückseite ist vorzugsweise flächenmäßig an den Sensorchip angepasst und erhöht. Vorteilhaft ist es damit möglich äußere Lasten bzw. zu messenden Kräfte sehr empfindlich zu messen, wobei es zu keiner Beschränkung durch ein Festigkeitsproblem an der Einspannstelle kommt.

Vorteilhaft erlaubt der auf Rückseite der Grundplatte befestigte Sensorchip eine präzise, am Ort des Chips ortsaufgelöste, Messung der Verformungen, Spannungen, Kräfte und/oder Drehmomente in dem betreffenden Bereich der Grundplatte. Hierbei werden bevorzugt Verformungen, Spannungen oder auf die Grundplatte wirkende Kräfte und Drehmomente auf das Substrat des Sensorchips übertragen, wobei die einen oder mehreren Sensorelemente Verformungen oder Spannungen des Substrates ermitteln. Bei entsprechender Kalibrierung kann überaus präzise anhand der Verformungen oder Spannungen des Substrates (welches rückseitig mit der Grundplatte verbunden ist) auf wirkende Kräfte oder Drehmomente am Krafteinleiter geschlossen werden.

Die Vorrichtung kann zu diesem Zweck äußert steif gehalten werden, da auch geringfügige Auslenkungen oder Translationen des Krafteinleiters zuverlässig in Form charakteristischer Verformungen oder Spannungsverteilung in der Grundplatte messbar sind.

Der Krafteinleiter selbst kann in ein Objekt, beispielsweise ein Bauteil, ein Bedienelement oder eine Maschine form- und/oder kraftschlüssig eingesetzt vorliegen, sodass mehrachsige Beanspruchungen des Objektes sich unmittelbar auf den Krafteinleiter übertragen.

Beanspruchungen bezeichnen mechanische Beanspruchungen und meinen im Sinne der Erfindung bevorzugt Verformungen, Spannungen, Kräfte und/oder Drehmomente, welche auf die betreffenden Komponenten, wie z.B. Objekt, Krafteinleiter oder Grundplatte wirken.

Zu den Beanspruchungen kann beispielsweise in Bezug auf den Krafteinleiter, vorzugsweise eines Stiftes, eine Auslenkung gehören, beispielsweise aufgrund von lateralen Kräften (Fₓ, F_{y}), welche bevorzugt am von der Grundplatte abgewandten Ende des Krafteinleiters wirken. Eine (mechanische) Spannung gibt bevorzugt das Verhältnis von Kräften (beispielsweise lateralen Kräften) pro gedachter Schnittfläche an. Eine mechanische Normalspannung σ auf einer gedachten Schnittfläche A durch einen Körper ist die auf sie bezogene senkrecht auf sie wirkende Komponente Fₙ einer äußeren Kraft F pro Fläche A. Die Normalspannung σₓₓ gibt daher bevorzugt die in einem gedachten x,y Koordinatensystem wirkenden Kraft entlang der x-Achse (Fₓ) zu einer dazu senkrecht stehenden Schnittfläche A des Sensorchips bzw. Substrates (yz-Ebene) an.

Die Auslenkung des Krafteinleiters, vorzugsweise des Stiftes, bewirkt eine Verformung der Grundplatte, insbesondere im Bereich der Einspannung des Krafteinleiters, d.h. in einem Bereich in dem der Krafteinleiter an der Grundplatte form- und/oder kraftschlüssig angebracht vorliegt.

In dem Bereich der Grundplatte treten beispielsweise Dehnungen oder Stauchungen auf, welche von der Richtung und Amplitude der Auslenkung abhängen bzw. Rückschlüsse auf diese zulassen.

Eine Dehnung (oftmals mit dem Formelzeichen ε bezeichnet) gibt eine relative Längenänderung eines Körpers an, welche eine Verlängerung oder Verkürzung sein kann. Man bezeichnet eine Vergrößerung des Objekts als positive Dehnung bzw. Streckung, andernfalls wird von einer negativen Dehnung bzw. Stauchung gesprochen. Eine Dehnung ist bevorzugt definiert als *ε = ΔI*/*I₀,* wobei *ΔI* die Längenänderung darstellt und *I₀* die Ausgangslänge.

Im Sinne der Erfindung werden mittels des Sensorchip insbesondere lokale Dehnungen oder Stauchungen der Grundplatte erfasst, welche eine präzise Bestimmung der Auslenkungen des Krafteinleiters in mehrere Achsen erlaubt. Die Ebene (xy-Ebene) entspricht bevorzugt jener Ebene des Sensorchips, auf welchen die Sensorelemente angeordnet und beispielsweise bevorzugt eine Scher- oder Normalspannungsdifferenz messen.

Wird der Krafteinleiter in ein Objekt, beispielsweise einen Joystick oder eine Achse, formschlüssig eingebracht, können so Verformungen oder Spannungen in dem Objekt unmittelbar anhand der Messung kleinster Auslenkungen ermittelt werden.

Beanspruchungen können ebenso axiale Kräfte (F_{z}) betreffen, welche auf den Krafteinleiter in dessen axialer Richtung (im Falle eines Stiftes dessen Längsrichtung) wirken. Im Falle einer axialen Zug- oder Druckkraft auf den Krafteinleiter, vorzugsweise in Form eines Stiftes, kommt es gleichfalls zu charakteristischen Verformungen oder Spannungen innerhalb des Einspannbereiches der Grundplatte. Beispielsweise kann im Falle eines runden Stiftes die Grundplatte aufgrund einer axialen Zug- oder Schubkraft am Krafteinleiter eine runde Wölbung erfahren, mit charakteristischem Dehnungs- bzw. Stauchungsmuster.

Weiterhin führen vorteilhaft ebenso an dem Krafteinleiter wirkende Drehmomente (M_{z}) zu spezifischen Verformungen oder Spannungen im Bereich der Grundplatte, beispielsweise in Form eines Torsionsmusters. Durch entsprechende Integration der Vorrichtung, insbesondere des Krafteinleiters, in ein Bauteil, beispielsweise eine Werkzeugspindel, können somit Drehmomente bzw. Torsionsmuster innerhalb des Bauteils bzw. der Spindel ausgemessen werden.

Die Anwendungsmöglichkeiten der erfindungsgemäßen Vorrichtung sind vielseitig, wobei die Vorteile der vorgeschlagenen Vorrichtung insbesondere bei der Messung oder Überwachung mehrachsiger Beanspruchungen zum Tragen kommen.

Zudem zeichnet sich die Vorrichtung durch einen kompakten Aufbau aus, da bevorzugt genau ein Sensorchip zum Einsatz kommt, welcher an einem lokalen Bereich der Grundplatte Beanspruchungen des Krafteinleiters misst.

Eine besondere Robustheit erfährt die Vorrichtung in der in der Handhabung zudem durch eine Medientrennung. Während der Krafteinleiter des Federkörpers vorderseitig mit dem Objekt oder Bauteil verbunden ist, ist der Sensorchip rückseitig getrennt auf der Federkörper Rückseite installiert. Beispielsweise kann die Vorrichtung aufgrund ihres kompakten Aufbaus, der präzisen Messgenauigkeit und Medientrennung als miniatuarisierter Strömungssensor Einsatz finden, vorzugsweise nach dem Prallplatten oder Vortex Prinzip bzw. auch Kombinationen davon.

Zudem ist die erfindungsgemäße Vorrichtung in besonderem Maße für ein gefühltes Steuern für Human Machine Interface (HMI) - Applikationen geeignet. Vorteilhaft ist hierfür eine hohe Steifigkeit des Federkörpers, wodurch weglose Steuerungen mit vorzugsweise geringen Kräften (z.B. 5 - 10 N) präzise möglich sind.

Integriert in einen Joystick kann die Vorrichtung beispielsweise zur Bedienung von Maschinen, Fahrzeugen oder Rollstühlen Einsatz finden. Ebenso ist eine Anwendung der Vorrichtung zur Bereitstellung einer Tastatur-Platte möglich. Durch die hochsensitive Messung einer axialen Kraft in Z und sowie von Drehmomente um X oder Y lassen sich Ort und Betrag einer Krafteinleitung in eine Platte mit angeschlossenem Kraftsensor auf überaus empfindliche Weise messen. Die Vorrichtung eignet sich zudem insbesondere als "fühlender Taster" in der 3D-Koordinaten Messtechnik, wobei im Vergleich zum Stand der Technik eine deutlich kleinere bzw. kompaktere und kostengünstigere Lösung angeboten werden kann.

Weiterhin erlaubt die kompakte und robuste Ausführungsweise der Vorrichtung zudem einen besonders vorteilhaften Einsatz als Kraftsensor in der Soft/Sensitiv Robotics. Hierbei kann eine kraftbasierte Regelung eine reine Wegsteuerung ergänzen oder ersetzen. Dies erlaubt eine wesentlich sensitivere Steuerung, beispielsweise im Hinblick auf Greifbewegungen oder bei der Positionierung von automatisch geführten Elementen, beispielsweise Werkzeugen, im Falle von Gegenkräften. Vorteilhaft kann die erfindungsgemäße Vorrichtung daher beispielsweise auch Einsatz in anspruchsvollen Menschmaschine Co-Working oder einer Präzisionsbearbeitung, beispielsweise spanenden Bearbeitung finden.

Rein weggesteuerten Robotorsystemen mangelt für derartigen Anwendungen häufig an einer notwendigen Sensitivität. Zwar kann die Wegsteuerung äußerst präzise erfolgen, ohne präzise Messung der wirkenden Kräfte kann es jedoch leicht zu unerwünschten Schädigung der zu bearbeiteten Objekte kommen.

In einer bevorzugten Ausführungsform ist der Federkörper derart konfiguriert, dass auf den Krafteinleiter wirkende Kräfte und/oder Drehmomente in einem lokalen Bereich der Grundplatte konzentriert werden, sodass der rückseitig unterhalb des Bereiches installierte Sensorchip anhand einer Messung von Verformungen, Spannungen, Kräften und/oder Drehmomente seines mit dem Bereich der Grundplatte verbunden Substrates Rückschlüsse auf die wirkenden Kräfte und/oder Drehmomente am Krafteinleiter erlaubt.

Besonders bevorzugt handelt es sich bei dem Krafteinleiter um einen Stift (bzw. auch Stab oder Zeiger), welcher bevorzugt kräftefreie (ohne Beanspruchung) im Wesentlichen senkrecht auf der Oberfläche der Grundplatte steht.

Der Krafteinleiter, insbesondere in Form eines Stiftes, ist bevorzugt länglich mit einer Querschnittsdimension, welche im Vergleich zur Länge bzw. Höhe klein ist. Das Verhältnis von Querschnittsdimension zur Länge bzw. Höhe wird bevorzugt als Aspektverhältnis bezeichnet. Die Querschnittsdimension bezeichnet bevorzugt die maximale Ausdehnung im Querschnitt des Krafteinleiters. Im Falle es kreisförmigen Querschnitts entspricht die Querschnittsdimension bevorzugt einem Durchmesser. Im Falle eines quadratischen Querschnitts entspricht die Querschnittsdimension bevorzugt einer Kantenlänge.

Begriffe wie im Wesentlichen, ungefähr, etwa, ca. etc. beschreiben bevorzugt einen Toleranzbereich von weniger als ± 20%, bevorzugt weniger als ± 10 %, noch stärker bevorzugt weniger als ± 5% und insbesondere weniger als ± 1%. Angaben von im Wesentlichen, ungefähr, etwa, ca. etc. offenbaren und umfassen stets auch den exakten genannten Wert.

In einer bevorzugten Ausführungsform weist der Krafteinleiter, vorzugsweise in Form eines Stiftes, einen Durchmesser von 0,5 mm bis 5 mm, besonders bevorzugt 1 mm bis 3 mm und/oder eine Länge von 5 mm bis 500 mm, bevorzugt 10 mm bis 100 mm auf.

In einer bevorzugten Ausführungsform weist der Stift ein Aspektverhältnis von Durchmesser zu Länge von 1: 3 bis 1:100, vorzugsweise 1: 5 bis 1:20 auf.

In einer bevorzugten Ausführungsform weist der Stift eine zentrale Bohrung auf, wobei eine Wandstärke des Stiftes mit zentraler Bohrung vorzugsweise zwischen 0,2 mm und 5 mm, besonders bevorzugt zwischen 0, 5 mm und 2 mm beträgt. In der Ausführungsform weist der Krafteinleiter vorzugsweise die Form eines Hohlzylinders auf, wobei die Bohrung entlang der zentral Achse vorliegt und die Wandstärke bzw. -dicke vorzugsweise einer Differenz vom Außenradius (des Stiftes) und Innenradius (der Bohrung) entspricht.

Die Bereitstellung einer Bohrung in einem Stift als Krafteinleiter führt zu besonders charakteristischen Verformungen der Grundplatte, sodass die auf den Krafteinleiter wirkenden Kräfte oder Drehmomenten besonders präzise vermessen werden können.

Eine Grundplatte meint im Sinne der Erfindung bevorzugt ein im Wesentlichen flächiges Bauelement mit einer Vorder- und Rückseite, wobei eine maximale Ausdehnung der Vorder- oder Rückseite (Länge, Breite) groß ist im Vergleich zur Dicke bzw. Stärke der Grundplatte. Die maximale Ausdehnung der Vorder- oder Rückseite einer Grundplatte kann im Falle einer Kreisform beispielsweise einem Durchmesser entsprechen. Bevorzugt kann die Dicke bzw. Stärke der Grundplatte beispielsweise um einen Faktor 5, 10, 20 oder mehr kleiner sein als, eine maximale Ausdehnung der Vorder- oder Rückseite (bspw. eines Durchmessers oder einer Kantenlänge der Vorder- bzw. Rückseite).

Die Form der Vorder- oder Rückseite der Grundplatte kann unterschiedlich ausgeprägt sein und beispielsweise einem Kreis, einem Rechteck, einem Trapez, einem Dreieck, einer Ellipse ohne Beschränkung entsprechen.

Die Positionierung des Sensorchips unterhalb des Krafteinleiters meint im Sinne der Erfindung bevorzugt, dass der Sensorchip auf der Rückseite der Grundplatte in einem lokalen Bereich positioniert vorliegt, welcher sich gegenüberliegend von dem Krafteinleiter bzw. der Einspannstelle befindet. Der Sensorchip überlappt vorzugsweise mithin mindestens teilweise mit einer Projektion der vorderseitigen Einspannstelle des Krafteinleiters. In Vorzugsformen können der Krafteinleiter und Sensorchip axial aufeinander ausgerichtet vorliegen.

In bevorzugten Ausführungsformen kann die Grundplatte durch einen im Wesentlichen homogenen flächigen Körper gebildet werden. Ebenso kann es bevorzugt, dass die Grundplatte kein homogener Körper ist, sondern Unterbrechungen, beispielsweise in Form von Schlitzen, Öffnungen oder andere Topologien aufweisen kann. Die Grundplatte kann beispielsweise auch durch eine Gitterstruktur gebildet werden, welche sich bei Beanspruchung des Krafteinleiters in charakteristischer (messbarer) Weise verformt. Der Begriff Grundstruktur kann daher vorzugsweise synonym für den Begriff Grundplatte verwandt werden.

In einer bevorzugten Ausführungsform weist die Grundplatte eine Stärke zwischen 0,1 mm und 2 mm, vorzugsweise zwischen 0,3 mm und 0,7 mm auf.

In einer bevorzugten Ausführungsform ist die Grundplatte und/oder der Krafteinleiter aus einem Metall geformt vorzugsweise ausgewählt aus der Gruppe Eisen, Stahl, Edelstahl, Federstahl, Messing, Kupfer, Titan, Aluminium, Blei, Magnesium, Berylliumkupfer und/oder weiterer Legierungen der vorgenannten.

In weiteren Vorzugsformen kann die Grundplatte und/oder der Krafteinleiter neben Metallen auch aus weiteren Werkstoffen der Mikrosystemtechnik wie beispielweise Halbleiter, Keramiken oder Kunststoffen bereitgestellt werden.

Insbesondere keramische Werkstoffe zeichnen sich insbesondere für die Bereitstellung von Grundplatte und/oder Krafteinleiter durch eine hohe Beständigkeit für Hochtemperaturanwendungen oder harsche Umgebungsbedingungen aus. Beispielsweise eignet sich die Vorrichtung aufgrund der rückseitigen Anbringung des Sensorchips an der Grundplatte auch für eine Medientrennung. So kann der Krafteinleiter sich für den Anwendungsfall eines Strömungssensor in einem strömenden Fluid (Flüssigkeit oder Gas) befinden, während der Sensorchip auf der abgewandten Seite der Grundplatte installiert vorliegt.

In einer bevorzugten Ausführungsform kann die Grundplatte und/oder der Krafteinleiter aus einem Substrat gebildet werden, bevorzugt ausgewählt aus der Gruppe bestehend aus monokristallinem Silizium, Polysilizium, Siliziumdioxid, Siliziumcarbid, Siliziumgermanium, Siliziumnitrid, Nitrid, Germanium, Kohlenstoff, Galliumarsenid, Galliumnitrid, Indiumphosphid und Glas.

Diese Materialien sind in der Halbleiter- und/oder Mikrosystemherstellung einfach und kostengünstig zu bearbeiten und eignen sich für eine Herstellung im großen Maßstab. Zudem erlaubt dies die Möglichkeit die Vorrichtung umfassend Federkörper und Sensorchip vorzugsweise in einem integrierten (Halbleiter-)prozess bereitzustellen. Dies vereinfacht die Herstellung, sodass kostengünstig ein besonders kompakter mehrachsiger Kraftsensor bereitgestellt werden kann.

Die vorgenannten Dimensionierungen und Materialien des Krafteinleiters und der Grundplatte haben sich als vorteilhaft erwiesen, um eine besonders sensitive Messvorrichtung bereitzustellen.

In einer bevorzugten Ausführungsform weist die Grundplatte und/oder der Krafteinleiter einen Freistrich auf, vorzugsweise in Form einer Umrandung des Krafteinleiters an dessen Einspannfläche mit Grundplatte. Freistrich (im Englischen auch als *relieve groove* bezeichnet) meint insbesondere eine Ausnehmung, Aussparung bzw. Kerbe, welche in Form einer Umrandung auf der Grundplatte und/oder dem Krafteinleiter vorliegt.

Besonders vorteilhaft sind in dieser Hinsicht die Bereitstellung einer zentralen Bohrung innerhalb des Stiftes und/oder eines Freistriches, vorzugsweise in Form einer Umrandung des Krafteinleiters an dessen Einspannfläche mit der Grundplatte.

Beide Merkmale führen unabhängig voneinander, aber besonders ausgeprägt in Kombination, zu charakteristischen Verformungen der Grundplatte im Einspannbereich, welche besonders sensitive Messungen mehrachsiger Beanspruchungen des Krafteinleiters zulassen.

In bevorzugten Ausführungsformen kann der Federkörper monolithisch ausgebildet sein. D.h. Krafteinleiter, vorzugsweise Stift, und Grundplatte werden aus einem Materialblock gebildet. Der Federkörper kann aber auch als ein zusammengesetzter Körper gebildet werden, wobei der Krafteinleiter, vorzugsweise ein Stift, auf der Grundplatte fixiert wird.

Im Sinne der Erfindung meint ein Sensorchip bevorzugt ein Halbleiterbauteil, umfassend mindestens ein Substrat mit einem oder mehreren Sensorelemente sowie vorzugsweise einer elektronischen Schaltung.

In einer bevorzugten Ausführungsform sind die einen oder mehreren Sensorelemente konfiguriert sind für eine resistive, bevorzugt eine piezoresistive, eine optische, eine magnetische, eine induktive und/oder eine kapazitive Messung von Verformungen, Spannungen, Kräften und/oder Drehmomenten des Substrates.

Resistive und piezoresistive Sensorelemente basieren in der Regel auf einer Änderung des elektrischen Widerstands aufgrund einer Längenänderung des Substrates auf dem sie angebracht vorliegen. Die piezoresistive Änderung des Widerstands aufgrund einer Dehnung der Sensorelemente ist dabei insbesondere bei (dotierten) Halbleiter deutlich stärker (k-Faktor) und erlaubt bevorzugt empfindlichere und genauere Dehnungsmessungen. Eine Widerstandänderung kann bevorzugt durch Änderung an der am Sensorelement anliegenden Spannung in einer Wheatstoneschen Brücke gemessen werden.

Piezoelektrische Sensorelemente beruhen bevorzugt auf einer materialinhärenten Generierung einer elektrischen Spannung durch auf die Anordnung wirkende Druck- und/oder Zugkräfte.

Eine induktive Messanordnung beruht bevorzugt auf der Stärke des durch ein veränderliches Magnetfeld hervorgerufenen Stroms.

Ein optisches Sensorelement, kann vorzugsweise Dehnungen zwischen verschiedenen Bereichen über eine Entfernungsmessung messen (beispielsweise interferometrischen Messung, bei der über eine Überlagerung zueinander kohärenter optischer Signale Informationen über deren Phasenunterschied enthält, welche ausgelesen werden kann. Dieser Phasenunterschied enthält dabei wiederum bevorzugt Informationen über die Entfernung zwischen den Bereichen.

Ein magnetisches Sensorelement kann beispielsweise auf einem Hall-Sensor beruhen, welcher je nach Position innerhalb eines Magnetfelds und damit je nach erfahrener magnetischer Flussdichte eine unterschiedliche Spannung generiert. Somit kann bevorzugt bei einem feststehenden Referenzmagnetfeld die gemessene Spannung zur relativen Lagebestimmung des Halls-Sensors zu diesem Magnetfeld genutzt werden. Durch dieses Messprinzip kann insbesondere eine Abstandsmessung (und somit Spannungs- bzw. Dehnungsmessung) zwischen verschiedenen Bereichen auf dem Substrat realisiert werden,

Ein kapazitives Sensorelement beruht bevorzugt auf dem Prinzip einer messbaren Änderung der Kapazität eines Kondensators bei einer Variation des Abstands zwischen den Kondensatorplatten (Elektroden). Hierzu sind eine Vielzahl verschiedener Implementierungen denkbar, beispielsweise in Form jeweils von Kondensatorplatte auf dem Substrat, als durch (MEMS-) Kammstrukturen, bei denen je nach Ausführungsform die Kammüberdeckung und/oder der Kammabstand variiert werden kann.

Ein Fachmann kennt verschiedene Sensorelemente sowie Materialien, welche bevorzugt verwendet werden können um resistive, bevorzugt piezoresistive, eine optische, eine magnetische, eine induktive und/oder eine kapazitive Messung von Verformungen, Spannungen, Kräften und/oder Drehmomenten zu ermöglichen.

Bevorzugt kommen hierbei MEMS-Sensoren zum Einsatz, d.h. Bauteil bzw. eine Komponente, welches auf MEMS-Technologie beruht. MEMS steht für den englischen Ausdruck *microelectromechanical system,* also ein Mikrosystem, wodurch eine kompakte (Mikrometerbereich) Bauweise bei gleichzeitig hervorragender Funktionalität mit immer geringeren Herstellungskosten erreicht wird. Insbesondere wird der gesamte Sensorchip umfassend, die Sensorelemente sowie die elektronische bevorzugt in vollintegriert in CMOS-Technologie aufgeführt.

Bevorzugt liegen die Sensorelemente auf einem Substrat gemeinsam mit einer elektronischen Schaltung zur Auswertung und/oder Steuerung der Sensorelemente angeordnet vor und stehen mit dieser über elektrische Verbindungen, welche beispielsweise durch Drahtbonds erfolgen und/oder im Substrat, z. B. durch Leiterbahnen angelegt sind, in Kontakt. Das Substrat fungiert insbesondere als mechanischer Träger kann zudem aber auch elektrische Funktionen realisieren, z. B. elektrische Verbindungen für die einzelnen Komponenten bereitstellen.

Bevorzugte elektronische Schaltungen umfassen ohne Beschränkung eine integrierte Schaltung (IC), ein Anwendungsspezifische integrierte Schaltungen (ASIC), eine programmierbare logische Schaltung (PLD), ein Field Programmable Gate Array (FPGA), einen Mikroprozessor, einen Mikrocomputer, eine speicherprogrammierbare Steuerung und/oder eine sonstige elektronische, bevorzugt programmierbare, Schaltung.

Mittels einer elektronischen Schaltung und/oder weiterer elektronischen Komponenten auf dem Sensorchip kann bevorzugt bereits ein Auslesen und/oder eine (Vor-)Verarbeitung der Messdaten der Sensorelemente erfolgen. Zu diesem Zweck kann auf dem Sensorchip oder einem Schaltungsträger beispielsweise ein Multiplexer (MUX, zum Auslesen der Signale mehrere Sensorelemente), ein Operationsverstärker (z.B. *differential difference amplifier* (DDA) mit variablem Gain) oder Analog-zu-digital-Wandler (*analog-to-digital converter,* ADC) zur Wandlung der Signale in digitale Daten vorliegen.

In einer besonders bevorzugten Ausführungsform umfassen die einen oder mehreren Sensorelemente piezoresistive Strukturen, bevorzugt piezoresistive Sensorbrücken.

Bevorzugt können die piezoresistiven Sensorbrücken als Wheatstone Brücken vorzugsweise als Vollbrücke ausgestaltet vorliegen. Vorteilhaft können hierbei vier piezoresistive Strukturen, welche die Vollbrücke bilden, sehr nahe zueinander positioniert werden. Störquellen wie ein Temperaturdrift werden kompensiert, da sich der Temperaturdrift bevorzugt gleichermaßen auf alle piezoresistive Strukturen auswirkt.

Besonders bevorzugt umfasst der Sensorchip mehr als 3, 5, 10, 15, 20 oder mehr Sensorelemente, wobei die Sensorelemente an unterschiedliche Positionen auf dem Substrat verteilt vorliegen.

Durch die Vielzahl von Sensorelemente kann eine besonders präzise Messung einer zweidimensionalen Verteilung von Verformungen, Spannungen, Kräften und/oder Drehmomente auf dem Substrates erfolgen. Anders beispielsweise als es bei Halbleiter-DMS Sensoren der Fall wäre, integriert der Sensorchip mithin die örtliche Beanspruchung am Substrat nicht über seine komplette Fläche, sondern erlaubt mittels der Vielzahl von Sensorelementen auf dem Substrat eine ortsaufgelöste Messung des Stresses bzw. der Dehnung im betreffenden Bereich unter der Grundfläche.

In einer bevorzugten Ausführungsformen wird mittels einer oder mehrerer der Sensorelemente eine Spannungsdifferenz σₓₓ-σ_{yy}- auf dem Substrat gemessen. Die Spannungen σₓₓ und σ_{yy} entsprechen orthogonalen Normalspannungen in der xy-Ebene.

In einer bevorzugten Ausführungsformen wird mittels einer oder mehrerer Sensorelemente eine Schubspannung σ_{xy} gemessen, sodass auch Scherkräfte, welche auf das Substrat wirken, erfasst werden können.

In einer bevorzugten Ausführungsform sind die Sensorelemente als piezoresistive Sensorbrücken ausgestaltet, welche im Quadrat als Wheatstone'sche Brücken angeordnet sind, wobei eine Scherspannung von n-Kanal-basierten Transistoren bestimmt wird und wobei die Sensorbrücke um 45° zu einem (x,y)-Koordinatensystem gedreht vorliegt, während p-Kanal-basierten Transistoren als Sensorbrücke parallel zum Koordinatensystem angeordnet vorliegen und die Normalspannungsdifferenz messen.

Besonders bevorzugt liegen die piezoresistiven Sensorbrücken als quadratische Feldeffekttransistoren (FET, bevorzugt MOSFET) mit vier Source/Drain-Kontakten (Piezo-FETs) ausgestaltet vor, die den piezoresistiven Schereffekt in n-Typ (NMOS) oder p-Typ (PMOS)-Inversionsschichten ausnutzen. Zur Messung der Scherspannung σ_{xy} werden bevorzugt NMOS-Sensorelemente und zur Messung der Normalspannungsdifferenz (σₓₓ *-* σ_{yy}) PMOS-Sensorelemente verwandt. Beispiele bevorzugter Sensorchips mit piezoresistiven Sensorbrücken als Sensorelemente werden u.a. in Gieschke et al. 2009 und Kuhl et al. 2013 offenbart. Vorteilhaft können hierdurch besonders kompakte Sensorelemente mit Abmessungen von 10 µm x 10 µm oder kleiner realisiert werden.

Besonders bevorzugt können auf dem Sensor sowohl mehrere Sensorelemente vorliegen, welche eine Spannungsdifferenz der Normalspannungen *σ*_{xx*-*} σ_{yy} bestimmen, als auch mehrere Sensorelemente, welche eine Schubspannung σ_{xy.} Hierdurch wird ein besonders präzises Abbild einer zweidimensionalen Spannungsverteilung im Substrat und somit mittelbar des Bereiches der Grundplatte erhalten, in dem der Krafteinleiter eingespannt vorliegt.

Gemäß der beanspruchten Erfindung, umfasst das Substrat des Sensorchips ein Halbleitermaterial, bevorzugt Silizium, monokristallines Silizium, Polysilizium, Siliziumdioxid, Siliziumcarbid, Siliziumgermanium, Siliziumnitrid, Nitrid, Germanium, Kohlenstoff, Galliumarsenid, Galliumnitrid und/oder Indiumphosphid. Diese Materialien sind in der Halbleiter- und/oder Mikrosystemherstellung einfach und kostengünstig zu bearbeiten und eignen sich ebenfalls gut für eine Massenherstellung. Ebenso sind diese Materialien für ein Dotieren und/oder Beschichten besonders geeignet, um in bestimmten Bereichen die gewünschten elektrischen, mechanischen thermischen und/oder optischen Eigenschaften zu erzielen.

Die Sensorelemente zur Messung einer auf den Sensorchip einwirkenden mechanischen Verformung und/oder Spannung werden auf oder in das Substrat eingebracht. Hierbei können aus der Halbleiterindustrie bekannte Materialien und/oder Fertigungstechniken zum Einsatz kommen, welche sich durch ihre Effizienz, Einfachheit, geringe Produktionskosten und Eignung zur Fertigung hoher Stückzahlen auszeichnen.

Beispielsweise kann mittels einer Maskierung (bevorzugt Fotolithografie) auf dem Substrat Bereiche zur Ausbildung der Sensorelemente und/oder einer elektronischen Schaltung definiert werden, an denen weitere Halbleiterprozesse wie Ätzen, Dotierung und/oder Abscheidung vorgenommen werden können. Bei dem Substrat kann es sich auch um ein mehrlagiges Substrat umfassend zwei oder mehr Lagen handeln, welche einzeln bearbeitet und zusammengefügt werden (Bonding).

Ein Ätzen und/oder eine Strukturierung kann bevorzugt ausgesucht werden aus der Gruppe umfassend Trockenätzen, nasschemisches Ätzen und/oder Plasmaätzen, insbesondere Reaktives Ionenätzen, Reaktives Ionentiefenätzen (Bosch-Prozess).

Eine Abscheidung oder Aufbringen kann bevorzugt ausgesucht werden aus der Gruppe umfassend physikalische Gasphasenabscheidung (PVD), insbesondere thermisches Verdampfen, Laserstrahlverdampfen, Lichtbogenverdampfen, Molekularstrahlepitaxie, Sputtern, chemische Gasphasenabscheidung (CVD) und/oder Atomlagenabscheidung (ALD). Eine Dotierung kann beispielsweise durch bekannte Verfahren wie Legierung, Diffusion und/oder Ionenimplantation erfolgen.

In einer bevorzugten Ausführungsform weist das Substrat des Sensorchips eine Dicke zwischen 100 µm und 600 µm, bevorzugt 200 µm und 400 µm auf. Die Dimensionierung des Substrates ist besonders geeignet, um eine gute Übertragungsfunktion zwischen Verformungen von Spannungen oder Verformungen des Bereiches der Grundplatte zu den Sensorelementen zu gewährleisten.

Bevorzugt wird der Sensorchip mit einer Seite des Substrates rückseitig an der Grundplatte befestigt. Hierzu kann beispielsweise ein Kleber eingesetzt werden, welcher eine direkte Verbindung zwischen Substrat und Grundplatte schafft.

Neben der Verbindung durch einen Kleber können für eine mechanische Kopplung des Sensorchips mit der Grundplatte eine Vielzahl von Techniken aus der Aufbau und Verbindungstechnik (AVT) eingesetzt werden. Diese umfassen ohne Beschränkung die Verwendung einer Klebefolie, ein Löten, ein Hartlöten (Schweißen), ein reaktives Fügen (vorzugsweise mit thermisch reaktiven Folien, insbesondere Nanometer-Multischichten bzw. Reaktive-Multischicht-Systeme RMS Fügen) oder auch ein Bonden, beispielsweise ein anodisches Bonden, ein direktes Bonden, Bondverfahren mit Zwischenschichten (z.B. ein Eutektisches Bonden), Glas-Frit-Bonden, adhäsives Bonden und/oder selektives Bonden.

Mechanische Verformungen werden vorzugsweise unmittelbar über die mechanische Kopplung mittels einer AVT-Technik (beispielsweise eines Kleben, Lötens, reaktiven Fügens, Bondens etc.) auf das dünnschichtige Substrat übertragen, wobei die Sensorelemente auf der gegenüberliegenden Seite des Substrates ein zweidimensionales Spannungs- oder Verformungsabbild aufnehmen.

Mittels der Sensorelemente werden mithin bevorzugt Verformungen oder Spannungen des Sensorchips selbst bzw. des Substrates ermittelt. Die Messdaten bieten aufgrund der mechanischen Kopplung mit dem Krafteinleiter unmittelbar Rückschlüsse auf Spannungen, Kräfte, Verformungen oder Drehmomente, welche auf den Krafteinleiter bzw. auf das Objekt wirken, in welches der Krafteinleiter eingebracht vorliegt.

Mittels verschiedener Kalibration können hierbei neben relativen Aussagen über die Änderungen der mechanischen Beanspruchungen im Krafteinleiter bzw. Objekt auch absolute Aussagen über die im Bauteil wirkenden Spannungen, Kräfte, Verformungen oder Drehmomente gewonnen werden. In die Kalibration können beispielsweise mechanischen Eigenschaften des Sensorchips bzw. des Substrates sowie des Krafteinleiters einfließen.

Aufgrund der endlichen Dicke des Substrates kann das zweidimensionales Spannungs- oder Verformungsabbild, welches von den Sensorelemente auf der freien Seite des Substrates von der tatsächlichen Spannungs- oder Verformungsverteilung an der Grundplatte abweichen. Die Unterschiede sind jedoch für einen gegebenen Sensorchip und Substrat konstant, sodass diese bei einer Kalibrierung mit berücksichtigt werden.

In einer weiteren bevorzugten Ausführungsform umfasst die Vorrichtung eine oder mehrere induktive Schnittstellen, vorzugsweise Spulen, für eine Übertragung von Messwerten und/oder zur Versorgung mit Energie.

Eine derartige telemetrische Schnittstelle erlaubt einen besonders flexiblen Einsatz einer energieautarken Vorrichtung.

Über die induktive Schnittstelle kann die zum Betrieb benötigte elektrische Leistung durch ein externes Lesegerät eingekoppelt werden. Daraufhin können die integrierte Sensorelemente die Spannungs- oder Deformationsverteilung messen und Messdaten wiederum drahtlos an das Lesegerät übertragen. Für eine Datenübertragung mittels der telemetrischen Schnittstelle kann es beispielsweise auch bevorzugt sein NFC (*near field communication*) Standard einzusetzen.

Vorteilhaft kann die Vorrichtung beispielsweise auch zur Überwachung rotierenden Objekte, beispielsweise von Werkzeugspindeln, eingesetzt werden, welche mittels kabelbehafteter Kontaktierung andernfalls nicht ohne Weiteres möglich ist.

Die induktive Schnittstelle bzw. (Transponder)Spulen können auf dem Sensorchip selbst, oder aber separat beispielsweise auf einer Leiterplatte installiert vorliegen.

In einer bevorzugten Ausführungsform liegt der Sensorchip mit einem Schaltungsträger kontaktiert vor. Ein Schaltungsträger ist bevorzugt ein Bauelement umfassend ein elektrisch isolierendes Material, auf dem elektrisch leitende Verbindungen (Leiterbahnen) und/oder elektronische Bauelemente bzw. Baugruppen vorliegen.

In bevorzugten Ausführungsformen ist der Schaltungsträger eine Leiterplatte (Platine, engl. *printed circuit board*)*,* wobei sowohl konventionelle (steife) Leiterplatten, als auch flexible Leiterplatten (engl. *flexible printed circuits*) zum Einsatz kommen können.

In einer bevorzugten Ausführungsform kann der Sensorchip mit einem Schaltungsträger auch mittels eines Chip-On-Board-Verfahrens kontaktiert vorliegen, wobei eine elektrische Kontaktierung bevorzugt mittels einer Flip-Chip-Montage oder Chip-and-Wire-Technik, vorzugsweise mittels Drahtbonden, erfolgt.

Bei der Chip-and-Wire-Technik wird der Sensorchip bevorzugt direkt auf den Schaltungsträger (z.B. eine Leiterplatte) geklebt und mittels Drahtbonden (Brücken aus feinem Draht) mit dem Schaltungsträger elektrisch verbunden.

Bevorzugt kann beispielsweise der Sensorchip mittels einer AVT-Technik (beispielsweise eines Kleben, Lötens, reaktiven Fügens etc.) an der Rückseite der Grundplatte befestigt vorliegen und über eine elektrische Verbindung, beispielsweise einen Drahtbond, mit einer ebenfalls an der Grundplatte befestigten Leiterplatte verbunden sein. Alternativ kann auch eine Flip-Chip-Montage bevorzugt zum Einsatz kommen, wobei vorzugsweise der Sensorchip mit einer aktiven Kontaktierungsseite auf der sich die Sensorik (Sensorelemente) und/oder Elektronik befindet zum Schaltungsträger (z.B. Leiterplatte) aufgebracht werden. Die Kontaktierung erfolgt bevorzugt mittels Kontaktierhügel (engl. *bumps*) , beispielsweise mittels einer anisotrop leitfähigen Folie. Auch in der Flip-Chip-Montage ist es bevorzugt den Sensorchip zur bestmöglichen Kraftübertragung mit dem Substrat unmittelbar mittels eines Klebers auf die Grundfläche aufzubringen, wobei die Leiterplatte auf der zugänglichen von der Grundplatte abgewandten Seite vorliegt.

Eine Kontaktierung des Sensorchips mit einer externen Datenverarbeitungseinheit kann bevorzugt über eine Schnittstelle auf dem Schaltungsträger, drahtbehaftet oder drahtlos erfolgen.

Eine Kontaktierung des Sensorchips mit einer externen Datenverarbeitungseinheit kann bevorzugt über eine Schnittstelle auf dem Schaltungsträger (z.B. einer Leiterplatte), drahtbehaftet oder drahtlos erfolgen.

Unterschiedliche Formen können für den Sensorchip bevorzugt sein, beispielsweise eine Kreisform, Rechteckform oder andere polygonale Form, besonders bevorzugt ist die Form eines Rechteckes, insbesondere eines Quadrates.

In einer bevorzugten Ausführungsform weist der Sensorchip eine Breite und/oder Länge zwischen 0,5 mm und 10 mm, vorzugsweise 1 mm und 5 mm, bevorzugt 1 mm bis 3 mm. Die Dicke des Sensorchips ist bevorzugt weniger als 1 mm, bevorzugt weniger als 700 µm, oder weniger als 500 µm.

Der Sensorchip ist mithin in der bevorzugten Ausführungsform im Wesentlichen flach, d.h. der Sensorchip ist durch eine größere Breite und/oder Länge in einer Ebene (xy-Ebene) im Vergleich zu einer dazu orthogonalen Dimension (z-Achse, Dicke) gekennzeichnet. Der Faktor kann beispielsweise 2, 3, 5 oder mehr betragen.

In einer bevorzugten Ausführungsform weist der Sensorchip eine Fläche von 0,25 mm² bis 100 mm², vorzugsweise 1 mm² bis 25 mm², besonders bevorzugt von 1 mm² und 9 mm² auf.

In einem weiteren Aspekt betrifft die Erfindung bevorzugt ein System umfassend
a) eine beschriebene Vorrichtung sowie
b) eine Datenverarbeitungseinheit
wobei die Datenverarbeitungseinheit konfiguriert ist für ein Auslesen vom Sensorchip ermittelten Messdaten.

Der durchschnittliche Fachmann erkennt, dass technische Merkmale, Definitionen und Vorteile bevorzugter Ausführungsformen, welche für die erfindungsgemäße Vorrichtung offenbart wurden, gleichermaßen für das System umfassend eine derartige Vorrichtung gelten, und umgekehrt.

Bevorzugt ist die Datenverarbeitungseinheit dafür konfiguriert aus den vom Sensorchip ermittelten Messdaten über Verformungen, Spannungen, Kräfte und/oder Drehmomente des Substrates auf den Krafteinleiter wirkenden Kräfte und/oder Drehmomente zu ermitteln.

Die Datenverarbeitungseinheit erlaubt somit bevorzugt eine Auswertung der Messdaten des Sensorchips, um die tatsächlichen Beanspruchungen am Krafteinleiter bzw. einem mit diesem verbundenen Objekt zu ermitteln.

Die elektronische Schaltung auf dem Sensorchip selbst kann ebenfalls bereits eine (Vor-)auswertung der Messdaten leisten. Es kann aber auch bevorzugt sein, dass die elektronische Schaltung im Wesentlichen die Messdaten unprozessiert an die (externe) Datenverarbeitungseinheit zur weiteren Verarbeitung und/oder Auswertung weiterleitet.

Die (externe) Datenverarbeitungseinheit ist bevorzugt eine Einheit, welche zum Empfang, Senden, Speichern und/oder Verarbeiten von Daten, bevorzugt von Messdaten, geeignet und konfiguriert ist. Die Datenverarbeitungseinheit umfasst bevorzugt einen integrierten Schaltkreis, ein Prozessor, ein Prozessorchip, Mikroprozessor oder Mikrokontroller zur Verarbeitung von Daten, sowie einen Datenspeicher, beispielsweise eine Festplatte, einen *random access memory* (RAM), einen *read-only memory* (ROM) oder auch einen *flash memory* zur Speicherung der Daten.

Zur Ermittlung der auf den Krafteinleiter wirkenden Kräfte und/oder Drehmomente anhand der vom Sensorchip ermittelten Messdaten über Verformungen, Spannungen, Kräfte und/oder Drehmomente des Substrates kann auf dem Datenspeicher bevorzugt ein Computerprogramm gespeichert vorliegen, welches Befehle umfasst, entsprechende Berechnungsschritte durchzuführen. Bevorzugt kann auf der Datenverarbeitungseinheit zu diesem Zweck zudem Referenzdaten vorliegen, welche durch geeignete Kalibration erhalten wurden.

Besonders bevorzugt ist die Datenverarbeitungseinrichtung ein Personal Computer (PC), ein Laptop, ein Tablet oder dergleichen, welche neben Mitteln zum Empfang, Senden, Speichern und/oder Verarbeiten von Daten auch ein Anzeigen der Daten sowie eine Eingabemittel umfassten, wie beispielsweise ein Keyboard, ein Maus, ein Touchscreen etc.. Zudem kann die Datenverarbeitungseinheit bevorzugt auch genutzt werden, um die Vorrichtung zu steuern, d.h. beispielsweise Parameter zur Durchführung der Messungen vorzugeben.

### Detaillierte Beschreibung

Im Folgenden soll die Erfindung an Hand von Beispielen näher erläutert werden, ohne auf diese beschränkt zu sein.

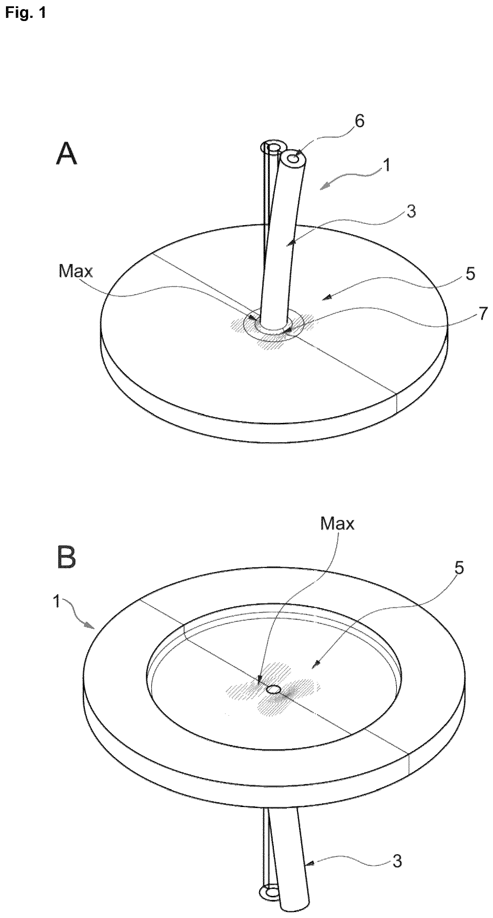

Fig. 1 zeigt eine schematische Illustration einer bevorzugten Ausführungsform eines erfindungsgemäßen Federkörpers **1.**

Der Federkörper **1** umfasst einen Krafteinleiter **3,** welcher die Form eines Stiftes aufweist und in einem Einspannbereich in eine Grundplatte **5** mechanisch einkoppelt. Ohne Krafteinwirkung steht der Krafteinleiter **3** im Wesentlichen senkrecht auf der Grundplatte **5.** Kräfte oder Drehmomente, welche auf den Krafteinleiter **3** wirken, führen zu Auslenkungen oder Verformungen, welche sich unmittelbar auf den Einspannbereich der Grundplatte **3** übertragen

Fig. 1A zeigt eine Draufsicht auf den Federkörper **1,** sodass die Vorderseite der Grundplatte **5** sichtbar ist. Fig. 1 B illustriert die Rückseite der Grundplatte **5.**

In Fig. 1A ist eine Auslenkung des Krafteinleiters **3** in eine Raumrichtung illustriert. Wie in Fig. 1B ersichtlich, führt eine derartige Auslenkung zu einer charakteristischen Verformung der Rückseite der Grundplatte **5** unterhalb des Stiftes **3.** Rote Bereiche kennzeichnen eine Streckung, während blaue Bereiche eine Stauchung anzeigen. Die Anordnung bzw. Ausrichtung der Bereiche von Stauchungen und Streckungen erlauben eine hochpräzise Auflösung der Richtung der Auslenkung des Krafteinleiters **3.** Auch die Amplitude der Verformung bzw. Spannung in der Grundplatte **5** korreliert sehr genau mit der Amplitude der Auslenkung des Krafteinleiters **3.**

Der illustrierte Federkörper **1** erlaubt somit, dass die am Krafteinleiter **3** wirkende Kräfte und/oder Drehmomente in einen lokalen Bereich der Grundplatte **5** konzentriert werden, sodass rückseitig unterhalb des Bereiches eine Sensorchip (in Fig. 1 nicht gezeigt) anhand einer Messung von Verformungen, Spannungen, Kräften und/oder Drehmomente seines mit dem Bereich der Grundplatte **5** verbunden Substrates Rückschlüsse auf die wirkenden Kräfte und/oder Drehmomente am Krafteinleiter **3** erlaubt.

Zu diesem Zweck hat sich die Form eines runden Stiftes **3,** welcher kräftefrei im Wesentlichen senkrecht auf der Grundplatte **5** steht, als vorteilhaft erwiesen. Besonders gute Ergebnisse können zudem erreicht werden, sofern der Stift **3** eine Durchbohrung **6** aufweist und in der Grundplatte **5** und/oder dem Krafteinleiter **3** ein Freistich **7** in Form einer Umrandung vorliegt.

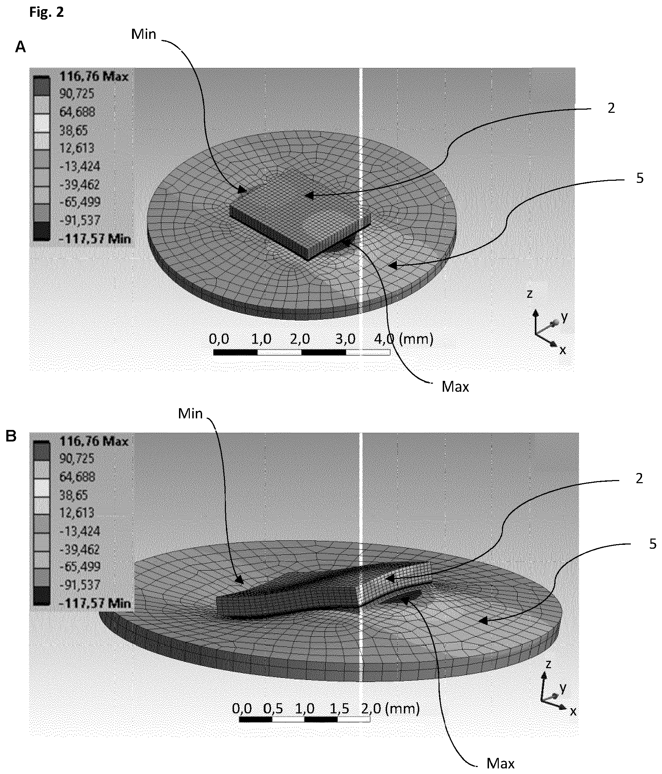

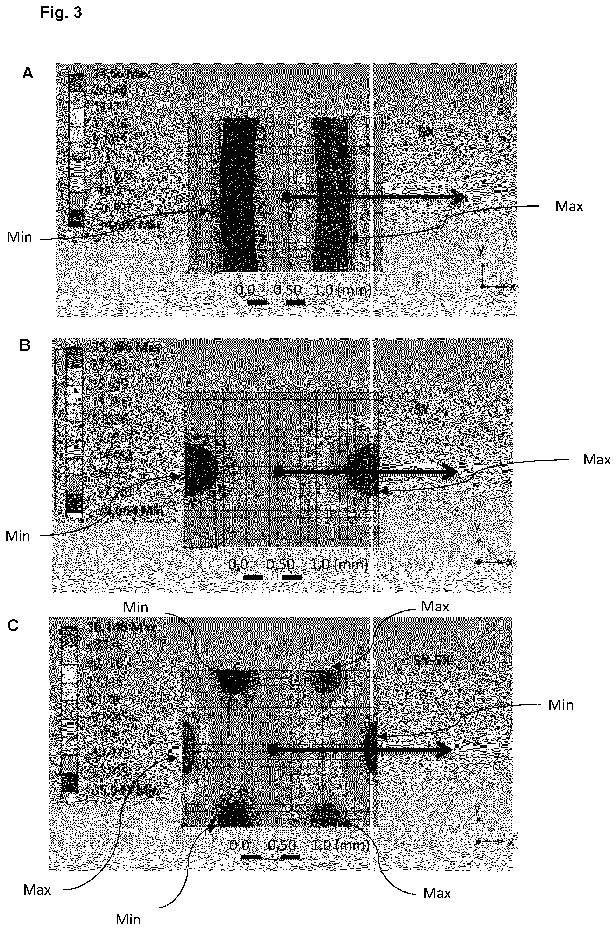

Die Fig. 2 und 3 illustrieren die Messung der resultierenden Spannungen oder Verformungen im Bereich der Grundplatte **5** unterhalb Krafteinleiters **3.**

Wie in Fig. 2 A und B illustriert, erfährt der Sensorchip **2** bzw. dessen Substrat durch die direkte Kopplung an die Grundplatte **5** eine analoge Verformungs- bzw. Spannungsverteilung, welche mittels der Sensorelemente (nicht gezeigt) auf dem Sensorchip **2** aufgezeichnet werden kann.

Fig. 3 illustriert eine zweidimensionale Spannungsverteilung an der Grundplatte **5,** welche aus einer Auslenkung des Krafteinleiters **3** gemäß der Fig. 1 resultiert.

In Fig. 3A und 3B sind jeweils die zweidimensionale Verteilung der Normalspannungen Sx (bzw. σₓₓ) und Sy (bzw. σ_{yy}) gezeigt.

Die Sensorchip **2** bzw. die darauf installierten Sensorelementen bestimmen vorzugweise die Differenz der Normalspannungen Sₓ-S_{y} (bzw. *σ*ₓₓ - σ_{yy})

Die Differenz ist in der Fig. 3 C zu sehen. Vorteilhaft ist die Spannungsverteilung durch eine Reihe charakteristischer Peaks gekennzeichnet, welche eine hochpräzise Messung der Auslenkung des Krafteinleiters **3** erlauben.

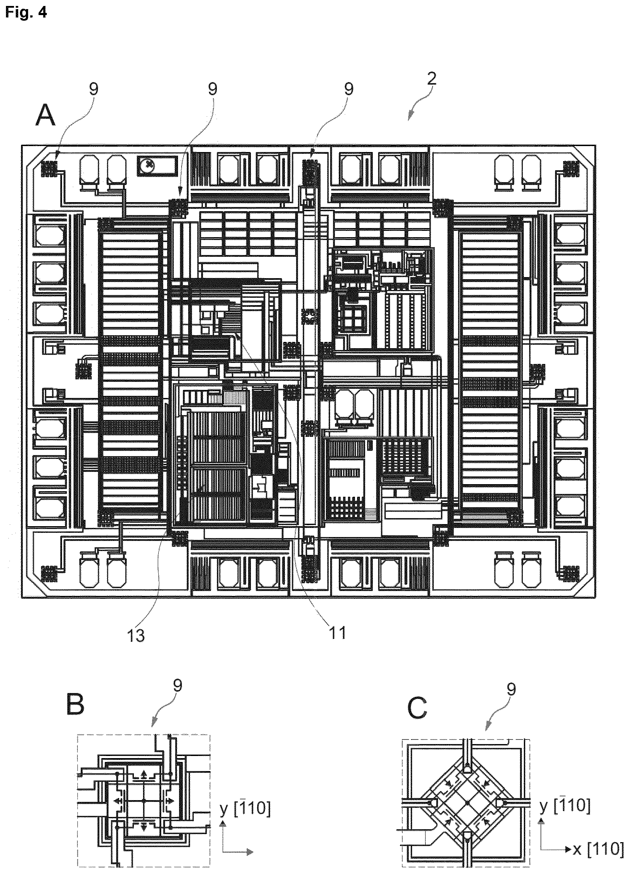

Fig. 4 illustriert eine bevorzugten Ausführungsform eines Sensorchips **2.** Gezeigt wird die Sensorik bzw. Elektronik, welche sich auf dem Substrat befindet.

Der Sensorchip **2** umfasst insgesamt 32 Sensorelemente **9,** welche an verschiedenen Positionen auf dem Substrat positioniert sind, um eine zweidimensionale Auflösung der Spannungsverteilung zu gewährleisten. Der Sensorchip **2** selbst weist eine Länge und Breite von ca. 2 mm x 2,5 mm auf und besitzt eine Dicke von ca. 300 µm

Der Sensorchip **2** ist vollintegriert in CMOS-Technologie ausgeführt. Bei den Sensorelementen **9** handelt es sich um piezoresistiven Sensorbrücken, welche als bevorzugt Wheatstone Brücken ausgestaltet vorliegen (vgl. Fig. 4 B und C).

In Fig. 4B ist ein Sensorelement **9** illustriert, welches als piezoresistive Sensorbrücke vom Typ PMOS ist und parallel zum Koordinatensystem (x,y) ausgerichtet vorliegt und insbesondere für die Differenz der Normalspannungen σₓₓ - σ_{yy} sensitiv ist .

Fig. 4 C zeigt ein Sensorelement **9** , welches als piezoresistive Sensorbrücke vom Typ NMOS ist und um 45° gedreht zum Koordinatensystem (x,y) ausgerichtet vorliegt und insbesondere für die Scherspannung σ_{xy} sensitiv ist .

Neben den Sensorelementen **9** weist der Sensorchip zusätzliche elektronische Komponenten auf. Insbesondere umfasst der Sensorchip **2** einen *control logic* als elektronische Schaltung **11** oder einen analog-to-digital converter (ADC) und einen Operationsverstärker (*differential difference amplifier* (DDA)). In der bevorzugten Ausführungsform liegt zudem eine induktive Schnittstelle (*telemetric interface*) zum drahtlosen Auslesen von Messdaten oder zur Energieversorgung vor.

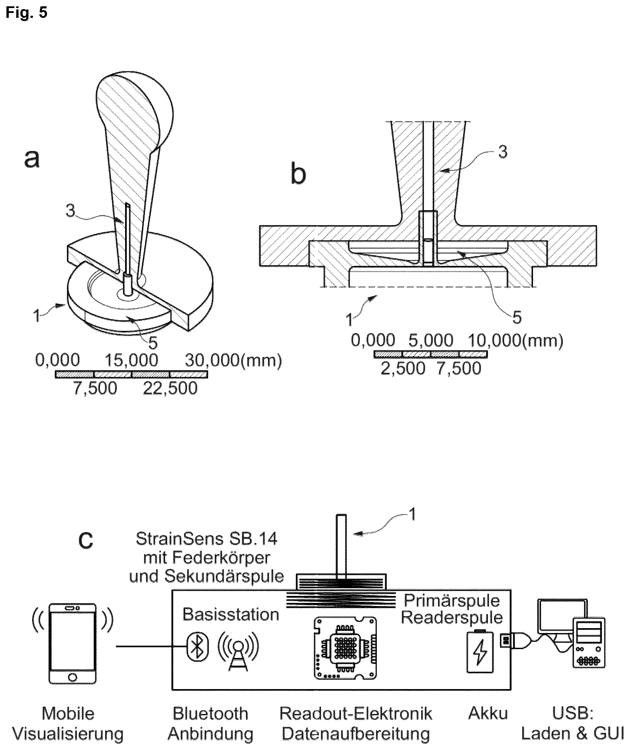

Eine beispielhafte Anwendung einer bevorzugten Vorrichtung wird in der Fig. 5 illustriert. Hierbei liegt die Vorrichtung mit dem Krafteinleiter **3** innerhalb eines Joysticks vor. Eine Bewegung des Joysticks führt zu einer Auslenkungen des Krafteinleiter **3,** welche auf Basis einer Messung der Spannungs- bzw. Verformungsverteilung durch den Sensorchip (nicht illustriert) bestimmt werden kann.

Zur Energieversorgung des Sensorchips und zum Auslesen der Messdaten umfasst die Vorrichtung eine induktive Schnittstelle in Form einer Sekundärspule. Die zum Betrieb benötigte elektrische Leistung kann durch ein externes Basis- oder Lesegerät eingekoppelt werden, welches zu diesem Zweck eine Primärspule umfasst. Daraufhin können die integrierte Sensorelemente die Spannungs- oder Deformationsverteilung messen und Messdaten wiederum drahtlos an das Basisgerät bzw. Lesegerät übertragen.

Das Basis- bzw. Lesegerät kann bereits eine (Vor)auswertung der Daten mittels einer Lese-Elektronik als Datenverarbeitungseinheit vornehmen. Bevorzugt werden die Messdaten zudem zur Auswertung, Visualisierung und/oder Speicherung an einer weitere externe Datenverarbeitungseinheit beispielsweise an einen PC, Notebook oder Mobilgerät übertragen.

### Bezugszeichenliste

- 1: Federkörper
- 2: Sensorchip
- 3: Krafteinleiter, vorzugsweise Stift
- 5: Grundplatte
- 6: Durchbohrung
- 7: Freistrich
- 9: Sensorelemente
- 11: Elektronische Schaltung, beispielsweise ASIC
- 13: Induktive Schnittstelle

### Literaturverzeichnis

Gieschke P. , Y. Nurcahyo, M. Herrmann, M. Kuhl, P. Ruther and O. Paul, "CMOS Integrated Stress Mapping Chips with 32 N-Type or P-Type Piezoresistive Field Effect Transistors," 2009 IEEE 22nd International Conference on Micro Electro Mechanical Systems, Sorrento, Italy, 2009, pp. 769-772, doi: 10.1109/MEMSYS.2009.4805496.
Jaeger Richard.C., Suhling, Jeffrey C., Ramani, Ramanathan, Bradley, Arthur T. and Xu, Jianping,CMOS Stress Sensors on (100) Silicon, IEEE JOURNAL OF SOLID-STATE CIRCUITS, VOL. 35, NO. 1, JANUARY 2000.
Kuhl M., Gieschke, P., Rossbach, D., Hilzensauer, S., Panchaphongsaphak, T., Ruther, P., Lapatki, B., Paul, O., Manoli, Yi, "A Wireless Stress Mapping System for Orthodontic Brackets Using CMOS Integrated Sensors," in IEEE Journal of Solid-State Circuits, vol. 48, no. 9, pp. 2191-2202, Sept. 2013, doi: 10.1109/JSSC.2013.2264619.

## Patentansprüche

1. Vorrichtung zur Messung mehrachsiger Beanspruchungen eines Objektes umfassend
- einen Federkörper (1) und
- einen Sensorchip (2), umfassend ein oder mehrere Sensorelemente (9) zur Messung von Verformungen, Spannungen, Kräfte und/oder Drehmomente sowie eine elektronische Schaltung (11) auf einem Substrat, wobei das Substrat des Sensorchips (2) ein Halbleitermaterial umfasst, ,
wobei
der Federkörper (1) eine Grundplatte (5) umfasst auf deren Vorderseite ein Krafteinleiter (3) installiert vorliegt, wobei der Sensorchip (2) auf der Rückseite der Grundplatte (5) unterhalb des Krafteinleiters (3) positioniert ist.

2. Vorrichtung nach dem vorherigen Anspruch,
**dadurch gekennzeichnet, dass**
der Federkörper (1) derart konfiguriert ist, dass auf den Krafteinleiter (3) wirkende Kräfte und/oder Drehmomente in einen lokalen Bereich der Grundplatte (5) konzentriert werden, sodass der rückseitig unterhalb des Bereiches installierte Sensorchip (2) anhand einer Messung von Verformungen oder Spannungen seines mit dem Bereich der Grundplatte (5) verbunden Substrates Rückschlüsse auf die wirkenden Kräfte und/oder Drehmomente am Krafteinleiter (3) erlaubt.

3. Vorrichtung nach einem der beiden vorherigen Anspruch,
**dadurch gekennzeichnet, dass**
der Federkörper (1) monolithisch ausgebildet ist.

4. Vorrichtung nach einem der vorherigen Ansprüche,
**dadurch gekennzeichnet, dass**
der Krafteinleiter (3) durch einen Stift gebildet wird, welcher bevorzugt im kräftefreien Zustand im Wesentlichen senkrecht auf der Grundplatte (5) steht.

5. Vorrichtung nach Anspruch 4,
**dadurch gekennzeichnet, dass**
der Stift (3) einen Durchmesser von 0,5 mm bis 5 mm, besonders bevorzugt 1 mm bis 3 mm, eine Länge von 5 mm bis 500 mm, bevorzugt 10 mm bis 100 mm und/oder ein Aspektverhältnis von Durchmesser zu Länge von 1: 3 bis 1:100, vorzugsweise 1: 5 bis 1:20 aufweist.

6. Vorrichtung nach einem der vorherigen Ansprüche 4 oder 5,
**dadurch gekennzeichnet, dass**
der Stift (3) eine zentrale Bohrung aufweist, wobei eine Wandstärke des Stiftes (3) mit zentraler Bohrung vorzugsweise zwischen 0,2 mm und 5 mm, besonders bevorzugt zwischen 0, 5 mm und 2 mm beträgt.

7. Vorrichtung nach einem der vorherigen Ansprüche,
**dadurch gekennzeichnet, dass**
die Grundplatte (5) eine Stärke zwischen 0,1 mm und 2 mm, vorzugsweise zwischen 0,3 mm und 0,7 mm aufweist.

8. Vorrichtung nach einem der vorherigen Ansprüche,
**dadurch gekennzeichnet, dass**
die Grundplatte (5) und/oder der Krafteinleiter (3) einen Freistrich (7) aufweist, vorzugsweise in Form einer Umrandung des Krafteinleiters (3) an dessen Kontaktfläche zur Grundplatte (5).

9. Vorrichtung nach einem der vorherigen Ansprüche,
**dadurch gekennzeichnet, dass**
die Grundplatte (5) und/oder der Krafteinleiter (3) aus einem Metall geformt werden vorzugsweise ausgewählt aus der Gruppe Eisen, Stahl, Edelstahl, Federstahl, Messing, Kupfer, Titan, Aluminium, Blei, Magnesium, Berylliumkupfer und/oder weiterer Legierungen der vorgenannten.

10. Vorrichtung gemäß einem der vorherigen Ansprüche
**dadurch gekennzeichnet, dass**
die einen oder mehreren Sensorelemente (9) konfiguriert sind für eine resistive, bevorzugt eine piezoresistive, eine optische, eine magnetische, eine induktive und/oder eine kapazitive Messung von Verformungen, Spannungen, Kräften und/oder Drehmomenten des Substrates.

11. Vorrichtung gemäß einem der vorherigen Ansprüche
**dadurch gekennzeichnet, dass**
die einen oder mehreren Sensorelemente (9) piezoresistive Strukturen umfassen, bevorzugt piezoresistive Sensorbrücken und/oder
der Sensorchip (2) mehr als 5, 10, 15, 20 oder mehr Sensorelemente (9) aufweist, wobei die Sensorelemente (9) unterschiedliche Sensitivitäten für eine Messung von Verformungen, Spannungen, Kräften und/oder Drehmomenten des Substrates aufweisen.

12. Vorrichtung gemäß einem der vorherigen Ansprüche
**dadurch gekennzeichnet, dass**
der Sensorchip (2) zur Messung von Verformungen, Spannungen, Kräften und/oder Drehmomenten in mehreren Achsen und/oder
zur Messung einer zweidimensionalen Verteilung von Verformungen, Spannungen, Kräften und/oder Drehmomenten des Substrates konfiguriert ist.

13. Vorrichtung gemäß einem der vorherigen Ansprüche
**dadurch gekennzeichnet, dass**
das Substrat des Sensorchips (2) eine Dicke zwischen 100 µm und 600 µm, bevorzugt 200 µm und 400 µm aufweist.

14. System umfassend
a) eine Vorrichtung gemäß einem der vorherigen Ansprüche
b) eine Datenverarbeitungseinheit
**dadurch gekennzeichnet, dass**
die Datenverarbeitungseinheit konfiguriert ist für ein Auslesen vom Sensorchip (2) ermittelter Messdaten.

15. System gemäß dem vorherigen Anspruch
**dadurch gekennzeichnet, dass**
die Datenverarbeitungseinheit dafür konfiguriert ist, aus den vom Sensorchip (2) ermittelten Messdaten über Verformungen, Spannungen, Kräfte und/oder Drehmomente des Substrates auf den Krafteinleiter (3) wirkenden Kräfte und/oder Drehmomente zu ermitteln.

## Claims

1. An apparatus for measuring multi-axis loads on an object comprising:
- a spring body (1), and
- a sensor chip (2) comprising one or more sensor elements (9) configured to measure deformations, stresses, forces and/or torques and an electronic circuit (11) on a substrate, wherein the substrate of the sensor chip (2) comprises a semiconductor material,
wherein the spring body (1) comprises a base plate (5) on the front side of which a force conductor (3) is installed, wherein the sensor chip (2) is positioned on the rear side of the base plate (5) below the force conductor (3).

2. The apparatus according to the preceding claim
**characterized in that**
the spring body (1) is configured in such a way that forces and/or torques acting on the force conductor (3) are concentrated in a localized area of the base plate (5), such that the sensor chip (2) installed on the rear side below said area enables conclusions to be drawn about the forces and/or torques acting on the force conductor (3) on the basis of a measurement of deformations or stresses of its substrate that is connected to said area of the base plate (5).

3. The apparatus according to one of the two preceding claims
**characterized in that**
the spring body (1) is monolithic.

4. The apparatus according to one of the preceding claims
**characterized in that**
the force conductor (3) is formed by a pin which is substantially perpendicular to the base plate (5) when no force is exerted upon it.

5. The apparatus according to claim 4
**characterized in that**
the pin (3) has a diameter from 0.5 mm to 5 mm, particularly preferably 1 mm to 3 mm, a length from 5 mm to 500 mm, preferably 10 mm to 100 mm and/or an aspect ratio of diameter to length from 1:3 to 1:100, preferably 1:5 to 1:20.

6. The apparatus according to one of the preceding claims 4 or 5
**characterized in that**
the pin (3) has a central bore, wherein a wall thickness of the pin (3) with central bore is preferably between 0.2 mm and 5 mm, particularly preferably between 0.5 mm and 2 mm.

7. The apparatus according to one of the preceding claims
**characterized in that**
the base plate (5) has a thickness between 0.1 mm and 2 mm, preferably between 0.3 mm and 0.7 mm.

8. The apparatus according to one of the preceding claims
**characterized in that**
the base plate (5) and/or the force conductor (3) has a relief groove (7), preferably in the form of a border around the area where the force conductor (3) comes into contact with the base plate (5).

9. The apparatus according to one of the preceding claims
**characterized in that**
the base plate (5) and/or the force conductor (3) are formed from a metal, preferably selected from the group of iron, steel, stainless steel, spring steel, brass, copper, titanium, aluminium, lead, magnesium, beryllium copper and/or other alloys of the aforementioned.

10. The apparatus according to one of the preceding claims
**characterized in that**
the one or more sensor elements (9) are configured for a resistive, preferably a piezoresistive, optical, magnetic, inductive and/or capacitive measurement of deformations, stresses, forces and/or torques of the substrate.

11. The apparatus according to one of the preceding claims
**characterized in that**
the one or more sensor elements (9) comprise piezoresistive structures, preferably piezoresistive sensor bridges, and/or the sensor chip (2) has more than 5, 10, 15, 20 or more sensor elements (9), the sensor elements (9) having different sensitivities for a measurement of deformations, stresses, forces and/or torques of the substrate.

12. The apparatus according to one of the preceding claims
**characterized in that**
the sensor chip (2) is configured to measure deformations, stresses, forces and/or torques in multiple axes and/or to measure a two-dimensional distribution of deformations, stresses, forces and/or torques of the substrate.

13. The apparatus according to one of the preceding claims
**characterized in that**
the substrate of the sensor chip (2) has a thickness between 100 µm and 600 µm, preferably between 200 µm and 400 µm.

14. A system comprising:
a) an apparatus according to one of the preceding claims
b) a data processing unit
**characterized in that**
the data processing unit is configured for reading out the measured data detected by the sensor chip (2).

15. A system according to the preceding claim
**characterized in that**
the data processing unit is configured to detect the forces and/or torques acting on the force conductor (3) from the measured data related to deformations, stresses, forces and/or torques of the substrate detected by the sensor chip (2).

## Revendications

1. Dispositif de mesure des contraintes multiaxiales d'un objet comprenant,
- un corps de ressort (1) et
- une puce de capteur (2) comprenant un ou plusieurs éléments de capteur (9) pour la mesure de déformations, de contraintes, de forces et/ou de couples ainsi qu'un circuit électronique (11) sur un substrat, dans lequel le substrat de la puce de capteur (2) comprend un matériau semi-conducteur,
dans lequel le corps de ressort (1) comprend une plaque de base (5) sur le côté avant de laquelle un introducteur de force (3) est installé, dans lequel la puce de capteur (2) est positionnée sur le côté arrière de la plaque de base (5) sous l'introducteur de force (3).

2. Dispositif selon la revendication précédente,
**caractérisé en ce que**
le corps de ressort (1) est configuré de sorte que les forces et/ou les couples agissant sur l'introducteur de force (3) sont concentrés dans une zone locale de la plaque de base (5), de sorte que la puce de capteur (2) installée à l'arrière sous la zone permet de tirer des conclusions sur les forces et/ou les couples agissant sur l'introducteur de force (3) sur la base d'une mesure des déformations ou des contraintes de son substrat relié à la zone de la plaque de base (5).

3. Dispositif selon l'une des revendications précédentes,
**caractérisé en ce que**
le corps de ressort est formé de manière monolithique.

4. Dispositif selon l'une des revendications précédentes,
**caractérisé en ce que**
l'introducteur de force (3) est formé par une broche qui est de préférence sensiblement perpendiculaire à la plaque de base (5) à l'état sans force.

5. Dispositif selon la revendication 4,
**caractérisé en ce que**
la broche (3) présente un diamètre de 0,5 mm à 5 mm, de préférence de 1 mm à 3 mm, une longueur de 5 mm à 500 mm, de préférence de 10 mm à 100 mm et/ou
présente un rapport d'aspect entre le diamètre et la longueur de 1:3 à 1:100, de préférence de 1:5 à 1:20.

6. Dispositif selon l'une des revendications 4 ou 5,
**caractérisé en ce que**
la broche (3) présente un alésage central, dans lequel une épaisseur de paroi de la broche (3) à alésage central est de préférence comprise entre 0,2 mm et 5 mm, de manière particulièrement préférée entre 0,5 mm et 2 mm.

7. Dispositif selon l'une des revendications précédentes,
**caractérisé en ce que**
la plaque de base (5) présente une épaisseur comprise entre 0,1 mm et 2 mm, de préférence entre 0,3 mm et 0,7 mm.

8. Dispositif selon l'une des revendications précédentes,
**caractérisé en ce que**
la plaque de base (5) et/ou l'introducteur de force (3) présente une ligne libre (7), de préférence sous la forme d'une bordure de l'introducteur de force (3) sur sa surface de contact avec la plaque de base (5).

9. Dispositif selon l'une des revendications précédentes,
**caractérisé en ce que**
la plaque de base (5) et/ou l'introducteur de force (3) sont formés d'un métal, de préférence choisi dans le groupe fer, acier, acier inoxydable, acier à ressort, laiton, cuivre, titane, aluminium, plomb, magnésium, cuivre-béryllium et/ou autres alliages de ceux-ci.

10. Dispositif selon l'une des revendications précédentes
**caractérisé en ce que**
les un ou plusieurs éléments capteurs (9) sont configurés pour une mesure résistive, de préférence piézorésistive, optique, magnétique, inductive et/ou capacitive des déformations, des contraintes, des forces et/ou des couples du substrat.

11. Dispositif selon l'une des revendications précédentes
**caractérisé en ce que**
les un ou plusieurs éléments capteurs (9) comprennent des structures piézorésistives, de préférence des ponts de capteurs piézorésistifs et/ou
la puce de capteur (2) présente plus de 5, 10, 15, 20 éléments de capteur ou plus (9), dans lequel les éléments de capteur (9) présentent des sensibilités différentes pour une mesure des déformations, des contraintes, des forces et/ou des couples du substrat.

12. Dispositif selon l'une des revendications précédentes
**caractérisé en ce que**
la puce de capteur (2) est configurée pour la mesure des déformations, des contraintes, des forces et/ou des couples dans plusieurs axes et/ou
configurée pour la mesure d'une distribution bidimensionnelle de déformations, de contraintes, de forces et/ou de couples du substrat.

13. Dispositif selon l'une des revendications précédentes
**caractérisé en ce que**
le substrat de la puce de capteur (2) présente une épaisseur comprise entre 100 µm et 600 µm, de préférence 200 µm et 400 yum.

14. Système comprenant
a) un dispositif selon l'une des revendications précédentes
b) une unité de traitement des données
**caractérisé en ce que**
l'unité de traitement de données est configurée pour une lecture de données de mesure déterminées par la puce du capteur (2).

15. Système selon la revendication précédente
**caractérisé en ce que**
l'unité de traitement de données est configurée pour déterminer les forces et/ou les couples agissant sur le transmetteur de force à partir des données de mesure déterminées par la puce de capteur (2) concernant les déformations, les contraintes, les forces et/ou les couples du substrat.
